**Europäisches Patentamt**

**European Patent Office**

**Office européen des brevets**

(19)

(11) Veröffentlichungsnummer: **0 609 548 A2**

# EUROPÄISCHE PATENTANMELDUNG

(12)

(21) Anmeldenummer: **93120618.9**

(22) Anmeldetag: **21.12.93**

(51) Int. Cl.5: **C12F 3/06**, A21D 2/36

(30) Priorität: **23.12.92 DE 4243879**

(43) Veröffentlichungstag der Anmeldung:
**10.08.94 Patentblatt 94/32**

(84) Benannte Vertragsstaaten:
**AT BE CH DE FR GB IT LI NL**

(71) Anmelder: **Kienlin, Lutz**
**Sechselberger Strasse 13**
**D-71566 Althütte-Waldenweiler(DE)**

(72) Erfinder: **Kienlin, Lutz**
**Sechselberger Strasse 13**
**D-71566 Althütte-Waldenweiler(DE)**

(74) Vertreter: **Weisert, Annekäte, Dipl.-Ing.**
**Dr.-Ing. et al**
**Patentanwälte**
**Kraus Weisert & Partner**
**Thomas-Wimmer-Ring 15**
**D-80539 München (DE)**

(54) **Verfahren zur Herstellung eines Nahrungsmittels aus Biertreber.**

(57) Die Erfindung betrifft ein Verfahren zur Herstellung eines Nahrungsmittels aus Biertreber durch Zerkleinern und Trocknen des Biertrebers, bei dem der Zerkleinerungsvorgang durch Einpressen des feuchten Biertrebers in das Mahlgerät unter Druck erfolgt, das Verbacken und/oder Verschmieren des Trebers im Gerät durch Luftimpulse verhindert wird und der Biertreber bis zu einer Teilchengröße von maximal 0,25 mm unter Bildung einer homogenen Biertrebermasse vermahlen wird, der Biertrebermasse ein oder mehrere Zusatzstoffe beigemischt werden, und das Gemisch getrocknet wird und gegebenenfalls die so erhaltenen Biertreberflocken fein zermahlen werden.

EP 0 609 548 A2

Die Erfindung betrifft ein Verfahren zur Herstellung eines Nahrungsmittels aus Biertreber. Die in den Brauereien anfallenden Biertreber müssen, da relativ eiweißreich und feucht-warm, innerhalb kurzer Zeit einer Verwertung zugeführt werden. Probleme entstehen dann, wenn die zunächst sinnvollste, bisher übliche Verwertung über den Tiermagen - also als Viehfutter - aus welchen Gründen auch immer ins Stocken gerät. Diese Situation tritt je nach den örtlich oder jahreszeitlich bedingten Gegebenheiten immer wieder auf. Bedingt durch den Rückgang der europäischen Landwirtschaft entstehen weiterhin zusätzliche Überhänge an Biertreber.

Diese Tatsache veranlaßt sowohl Praktiker als auch die Wissenschaftler, nach Möglichkeiten einer gangbaren Alternative zu suchen.

Alle bisher erdachten, in kleineren Versuchen auch erprobten Lösungsmöglichkeiten scheiterten entweder an der großtechnischen Durchführbarkeit oder an der Möglichkeit einer kostendeckenden Finanzierung. Favorisiert werden zur Zeit zwei Alternativmöglichkeiten der Verwertung: einmal die Verbrennung der Biertreber und zum zweiten die Erzeugung von Biogas aus Biertreber.

Beide Verfahren sind zunächst mit einem hohen technischen Aufwand belastet und hinterlassen wiederum Reststoffe, die einer weiteren Entsorgung bedürfen. Daher läßt sich für den einzelnen Betrieb, also die Brauerei, keine sinnvolle Kostenrechnung aufstellen.

In der DE 30 39 430 C1 wird ein Verfahren zur Gewinnung ballaststoffreicher und proteinreicher Fraktionen aus Biertreber beschrieben, bei dem die Naßtreber im Heißluftstrom während einer schlagartigen Trocknung in grobe Schalenbruchstücke und feine Proteinpartikel zerkleinert und diese dann getrennt werden. Das bei diesem Verfahren erhaltene Produkt besitzt einen relativ großen Ballaststoffgehalt und wird anderen Nahrungsmitteln, z.B. Backwaren, beigemischt. Das bei dem Verfahren erhaltene Produkt besitzt den Nachteil, daß sein Geschmack nicht neutral ist.

In der US 4 341 805 wird ein Produkt beschrieben, das durch Trocknen von Biertreber und Mahlen erhalten wird. Auch dieses Produkt besitzt keinen neutralen Geschmack.

Die DE 37 04 651 A1 betrifft ein Verfahren zur Gewinnung ballaststoffreicher, lipidarmer Fraktionen aus Biertrebern, bei dem der Naßtreber in Wasser suspendiert wird und die Partikel der Suspension zerkleinert werden. Die Suspension wird dann erwärmt und anschließend in Fraktionen getrennt. Dieses Verfahren besitzt den Nachteil, daß es sehr energieaufwendig ist, da die Wassersuspension erhitzt wird.

Die DE 39 00 484 A1 betrifft ein Lebensmittel auf der Basis von Getreideschlempe. Die Herstellung erfolgt u.a. durch Zermahlen in einem Homogenisator.

SU1438678 A (Derwent-Referat) betrifft die Verwendung von gemahlenem Biertreber als Beimischung zu Brot.

Gemäß dem obigen Stand der Technik hat der Treber bis jetzt jedoch nur beschränkte Verwendung in Nahrungsmitteln gefunden. Versuche, Treber in der menschlichen Ernährung, z.B. als Ballastträger in Backwaren (Braumeisterbrötchen), und ähnlichem unterzubringen, haben aufgrund der bestimmten Geschmackseingetümlichkeiten bisher nicht zum Erfolg geführt. Die bei den verschiedenen Verfahren erhaltenen Produkte besitzen alle den großen Nachteil, daß sie stets Teilfraktion des ursprünglichen Trebers sind und damit in unterschiedliche Inhaltsstoffe (ballaststoffreiche, eiweißreiche usw.) aufgetrennt sind. Da die ballaststoffreichen Teile bitter schmecken, finden sie kaum in Nahrungsmitteln Verwendung.

Erfindungsgemäß soll einer vollkommen anderen Verwertungsphilosophie des Biertrebers Platz eingeräumt werden.

Seit Jahrhunderten wird hierzulande nach dem deutschen Reinheitsgebot Bier gebraut. Brauer und Mälzer sind also seit langem darauf bedacht, mit besten, reinen - also gesunden - Rohstoffen gutes Bier herzustellen. Das wachsende Umwelt-und Gesundheitsbewußtsein der Bevölkerung - also auch der Biertrinker - veranlaßt Mälzer und Brauer, sich neuerdings Braugerste und Brauweizen aus integriertem und kontrolliertem Vertragsanbau zu sichern. Eine Entwicklung, die mit Sicherheit immer mehr Schule machen wird und zu einem ganz erheblichen werblichen Verkaufsargument für die entsprechenden Biere genützt werden kann.

Nun bemüht sich die Brauwirtschaft also einmal um allererste Gerste- und Weizenqualitäten, dann werden die Braustätten auf den möglichst neuesten Stand der Technik gebracht, um letztendlich am Markt mit hervorragenden Bieren präsent zu sein.

Was aber passiert mit dem Rohstoff Braugerste oder Weizen? Es sollte einmal genau überdacht werden, wie vielfältig sich die Be- und Verarbeitungskriterien dieser Materie vom landwirtschaftlichen Betrieb über die Mälzerei bis ins Sudhaus darstellen. Es erscheint unverständlich, daß ein über den Kochprozeß weitgehend keimfreies Produkt erster Herkunft plötzlich zum Entsorgungsproblem der Brauerei wird.

Es gibt wohl keinen Zweifel darüber, daß mit frischem Biertreber ein Produkt vorhanden ist, das auch sehr kritischen und diffizilen Auflagen der Lebensmittelchemie entspricht. Es erscheint also wenig sinnvoll, darüber nachzudenken, wie Biertreber verbrannt oder vergast werden kann.

Bekanntermaßen leben auf dieser Welt ca. 500 Mio. Menschen, die zumindest zeitweise hungern. 200 Millionen von ihnen sind von Hunger und Mangelernährung akut bedroht. Außerdem ist bekannt, daß die Ernährungsgewohnheiten in der sogenannten westlichen Welt alles andere als gesundheitsfördernd sind. Eine viel zu energie- und fettreiche Kost ist Ursache der meisten sogenannten Zivilisationskrankheiten. Es fehlt entscheidend an schmackhaften, ballastreichen Nahrungsmitteln.

Es fehlt aber auch an einer Möglichkeit, Menschen, und hier vornehmlich Kindern, in absoluten Hungerzonen eine Art lebenserhaltende Nahrung (Überlebensrationen) bereitzustellen, die mit stammes- oder ortsüblichen Zubereitungsmethoden dargeboten werden kann. Weizen, Mais, Hirse oder Milchpulver alleine helfen nicht allzuviel und bieten die Möglichkeit einer betrügerischen Rückvermarktung in den Welthandel.

Somit besteht ein hohes Interesse und ein reales Bedürfnis, ein vielseitig einsetzbares Nahrungsmittel auf der Grundlage von Biertreber herzustellen.

Die bisherige Technik hat versucht, mit den typischen Eigenschaften des Trebers zurechtzukommen. Treber enthält nur 20 bis 25 % Trockenmasse und hat eine typische inhomogene Struktur aus großen, groben Schalenteilen mit anhaftenden kleineren Mengen von eiweißreicher und energiereicher Beschaffenheit. Demzufolge ist die Zerkleinerung und Trocknung schwierig. Eine kontinuierliche Zerkleinerung von nassem, nativem Treber ist nach dem Stand der Technik in einem Mahlaggregat nur möglich, wenn dem ohnehin feuchten Biertreber zusätzlich Wasser zugeführt wird. In der Praxis geht diese Wasserzugabe bis zu einem Verhältnis von 60 Gew.-Teilen Wasser auf 40 Teile Treber. Nur so kann eine übermäßige Erwärmung sowie ein Verschmieren und Aufbacken der Mahlwerkzeuge verhindert werden. Eine andere Möglichkeit liegt darin, den Mahlgang weiter einzustellen, womit der beabsichtigte Zweck gleichmäßig feiner Vermahlung nicht erreicht werden kann. Die bei der Trocknung feuchter verbleibenden Schalenteile fördern im Endprodukt die Bildung von Schimmelnestern, die Mykotoxine enthalten können. Jeder Wasserzusatz zur Zerkleinerung beeinträchtigt die Wirtschaftlichkeit einer Trocknung ganz erheblich. Die erzwungene Aufteilung in zwei Fraktionen mit unterschiedlicher Verwertung als Nahrungs- oder Futtermittel zerstört auch den ursprünglichen physiologischen und gesundheitsfördernden Komplex des Trebers als wertvollen, harmonischen Nahrungsstoff für Ballast-, Eiweiß-, Extrakt- und Wirkstoffe (Vitamine, Spurenelemente, Minerale).

Die erfindungsgemäße Aufgabenstellung lautete daher, ein Verfahren zu finden, das die komplexe Natur des Trebers erhält, einfach und am Ort der Entstehung (Brauerei) eingerichtet und angewendet werden kann. Eine Aufspaltung in Fraktionen soll ebenso wie Wasserzusatz oder Vorentwässerung vermieden werden.

Der vorliegenden Erfindung liegt insbesondere die Aufgabe zugrunde, ein Verfahren zur Verfügung zu stellen, gemäß dem Biertreber auf einfache Art und Weise so behandelt wird, daß er als Nahrungsmittel verwendet werden kann. Das erfindungsgemäße Verfahren soll am Ort des Anfalls, das heißt in der Brauerei, auf einfache Weise durchführbar sein. Das bei dem erfindungsgemäßen Verfahren erhaltene Produkt soll wohlschmeckend sein und als Nahrungsmittel Verwendung finden.

Unter Berücksichtigung vorstehender Überlegungen wird im folgenden ein Verfahren beschrieben, nach dem es möglich ist, aus frischen Biertrebern ein schmackhaftes Nahrungsmittel herzustellen. Dabei können die verschiedensten Geschmacksrichtungen berücksichtigt werden; außerdem können in das erhaltene Produkt gezielt Mineralstoffe, Spurenelemente, ggf. Medikamente eingemischt werden.

Gegenstand der Erfindung ist ein Verfahren zur Herstellung eines Nahrungsmittels aus Biertreber, bei dem die folgenden Stufen durchgeführt werden:

(1) Zerkleinern des Biertrebers durch Einpressen des feuchten Biertrebers in ein Mahlgerät unter Druck, Verhindern des Verbackens und/oder des Verschmieren des Trebers im Gerät durch Luftimpulse und Vermahlen des Biertrebers bis zu einer Teilchengröße von maximal 0,25 mm unter Bildung einer homogenen Biertrebermasse,

(2) Zumischen von einem oder mehreren Zusatzstoffen zu der Biertrebermasse, und

(3) Trocknen des Gemisches.

Bei dem erfindungsgemäßen Verfahren wird nativer Biertreber, wie er in der Brauerei anfällt, verwendet. Der normale, frische und feuchte Biertreber wird in das an sich bekannte Mahlgerät ohne Zusatz von Wasser mittels einer geeigneten Pumpe unter Druck eingeführt. Der Druck, der dabei verwendet wird, ist nicht besonders kritisch. Es muß ein Druck sein, der ausreicht, den Treber in das Gerät einzuführen. Die obere Grenze des Druckes wird durch wirtschaftliche Überlegungen begrenzt. Im allgemeinen wird ein Druck von 2,0 bis 12 bar, vorzugsweise von 4 bis 8 bar, verwendet.

Das anschließend übliche Verbacken oder Verschmieren des Mahlgutes (Treber), dem bisher entweder durch Wasserzugaben oder durch Weiterstellung der Mahleinrichtung begegnet wurde, wird erfindungsgemäß dadurch verhindert, daß dem Gerät durch eine entsprechend ausgestaltete Bohrung und/oder Düse Luftimpulse in die Mahlpassage eingegeben werden. Die Luftimpulse werden dabei sowohl in der zeitlichen Abfolge (Periode), wie in der Dauer der Luftzuführung (Intervall), wie in der Höhe des Druckes durch eine entsprechende, an sich bekannte Einrichtung (Steuerung mit entsprechenden Relais, ggf. computerisiert) auf die natürlich schwankenden Eigenschaften des Materials abgestimmt. Ebenso wird die benötigte Luftmenge in an sich bekannter Weise (Kompressor mit Filterung und Druckgefäß) verfügbar gehalten.

Auf diese Weise ist es überraschenderweise störungsfrei und wirksam möglich, den Biertreber homogen auf Partikel unter maximal 0,25 mm zu zerkleinern. Es ist bevorzugt, die Teilchen auf eine Größe von unter maximal 0,2 mm zu zerkleinern. Anschließend kann die gewonnene Trebermasse beliebig getrocknet werden, vorzugsweise über Walzentrockner. Der Masse können jedoch auch beliebige Zusatzstoffe in fester oder flüssiger Form beigemischt werden, und die Masse kann dann anschließend weiterverarbeitet oder getrocknet werden. Die Trocknung kann bei einer Temperatur im Bereich zwischen 60 bis 110°C im Naßgut erfolgen. Es ist bevorzugt, bei der Siedetemperatur des Wassers im Naßgut, d.h. um 100°C, zu trocknen. Die Trocknung kann, wie es dem Fachmann geläufig ist, auch im Vakuum erfolgen, wobei das Vakuum von der verwendeten Trocknungstemperatur abhängt. Die Trocknungszeit ist nicht kritisch. Sie kann bis 60 Minuten betragen und hängt von der verwendeten Temperatur ab. Im allgemeinen ist die Trocknung innerhalb einer Zeit von 10 bis 30 Minuten beendigt. Erfindungsgemäß können dem Treber jegliche Art fester, semifester oder flüssiger Zusatzstoffe beigemischt werden. Beispiele hierfür sind Stärkeprodukte, insbesondere Getreidemehl, wie Weizenmehl, Reismehl, Maismehl und Hirsemehl, Zuckerprodukte, Zucker aller Art, Honig, Süßstoffe, Obstsirupe, Suppen- und Saucengrundstoffe, Fleischaroma, Tomatenmark, Kakaopulver, Milchpulver, beliebige trockene oder pastöse Lebensmittel, Mineralstoffe, Spurenelemente, Medikamente und/oder deren Gemische. Die Zusatzstoffe können dem Biertreber in beliebigen Mengen beigemischt werden. Bezogen auf das nach der Trocknungsstufe erhaltene Endprodukt kann das Produkt bis zu 70 Gew.-% Zusatzstoff enthalten. Im allgemeinen werden der Biertrebermasse 5 bis 40 Gew.-%, vorzugsweise 5 bis 50 Gew.-%, Zusatzstoff, bezogen auf das erhaltene Trockenprodukt, beigemischt.

Die Zumengbestandteile als Komponenten bestimmen sich nach dem beabsichtigten Endprodukt als Lebensmittel, Gesundheitskost oder spezielle Diätkost. Es kann auch als Futtermittel verwendet werden.

Überraschenderweise erhält man bei dem erfindungsgemäßen Verfahren ein Produkt, das schrotartig bis mehlartig ist, unerwartete Möglichkeiten und Vorteile besitzt und überraschenderweise nicht mehr zu bitter schmeckt. Aufgrund des Standes der Technik war es für den Fachmann überraschend und nicht naheliegend, daß durch Zermahlen des Biertrebers auf eine bestimmte Teilchengröße, Zugabe von Stärke- und/oder Zuckerverbindungen zu dem erhaltenen Produkt und Trocknen ein Material erhalten wird, das in der menschlichen Ernährung ohne Weiterbehandlung und insbesondere ohne Trennung in ballaststoffreiche und eiweißreiche Fraktionen verwendet werden kann. Damit eröffnet das erfindungsgemäße Verfahren dem Biertreber erstmals den unbehinderten Eingang in jene Gebiete der Heilkost, Gesundheitskost und diätetischen Lebensmittel, die bisher von Kleieprodukten abgedeckt wurden. Der Fortschritt liegt insbesondere darin, daß das erhaltene Produkt sowohl im Bezug auf Schadstoffe, insbesondere Mykotoxine, vollkommen unbedenklich ist und einen hohen Nährwert besitzt, als auch ausreichend Faserstoffe enthält. Das Produkt kann leicht verpackt und transportiert werden, da es über einen langen Zeitraum (mindestens ein Jahr) haltbar ist, und in Länder, wo akute Nahrungsmittelnot herrscht, gebracht werden könnte.

Verfahrensablauf

1. Frische Biertreber werden mittels einer Vorpreßvorrichtung einer Pumpe zugeführt. Über diese Pumpe erfolgt eine kontinuierliche Beschickung einer Zahnkolloidmühle. Im Mahlgehäuse dieser Mühle wird durch den Preßdruck der Pumpe ein Druck von 2 bis 12 bar aufgebaut. Um den Durchlauf- und Mahlprozeß zu beschleunigen bzw. eine kontinuierlich hohe Leistung zu erzielen und um ein Verschmieren des eigentlichen Mahlganges zu verhindern, wird mittels sensorgesteuerter Preßluft die Materie durch die Zahnkolloidmühle gepreßt bzw. durchgeblasen. Luftmenge und Intervallabstand sind abhängig von der Beschaffenheit des Biertrebers sowie der Größe und Leistungsfähigkeit des Mühlenaggregats. Gleichzeitig dient diese in kurzen Zeitabständen eingeleitete Preßluft der Abkühlung des Mahlguts, welches sich während des Mahlvorgangs von einer Ausgangstemperatur von ca. 25 bis 30°C auf bis etwa 65°C beim Austritt der Mühle erhöhen kann. Damit bleibt die Trebermasse unter dem Temperaturbereich des Sudvorganges, der 75 bis 95°C betragen kann. Die Biertreberpartikel werden feinst vermahlen (maximal 0,2 mm).

2. Die beim Maischeprozeß in der Brauerei ausgelösten Stärke-Zucker-Anteile können vor der weiteren Verarbeitung ganz oder teilweise in Form von (zweckmäßigerweise) Weizenmehl wieder zurückersetzt werden. Dies geschieht in einem der Zahnkolloidmühle nachgeordneten Mischbehälter.

3. Über diesen Mischbehälter können je nach späterem Verwendungszweck oder auch der gewünschten Geschmacksrichtung die verschiedensten Zugaben beigemischt werden, z.B. Zucker, Honig, Kakaopulver, Milchpulver, Fleischaroma, Tomatenmark, alle nur denkbaren trockenen oder pastösen Lebensmittel, Mineralstoffe, Spurenelemente, auch Medikamente.

Dies ist möglich, da das Grundprodukt Biertreber + Mehl praktisch völlig geschmacksneutral ist. Die Beimischungen erfolgen alle in feuchtem bzw. nassem Zustand, wodurch gewährleistet ist, daß ein absolut homogener Brei der weiteren Verarbeitung zugeführt wird.

4. Der im Mischbehälter, einem Rührwerk oder Kneter durchlaufend oder chargenweise zubereitete Biertreber-Zutatenbrei wird mittels einer einstellbaren Pumpe oder einer anderen der Konsistenz des Materials angepaßten Vorrichtung auf eine Trocknungswalze mit Obenauftrag und Satellitenwalzen aufgebracht. In einem kurzzeitigen Trocknungsprozeß erfolgt eine schnelle Filmbildung. Es entsteht ein flockiges, auch gut vermahlbares Produkt. Der von der Walze ablaufende Film läuft über einen Sichter, kühlt ab und kann je nach Wunsch entsprechend feinflockig gestaltet werden.

5. Das nun fertige Produkt kann entweder in Kleinpackungen abgefüllt oder über eine Siloanlage in größeren Partien abgegeben werden.

Dies ist die relativ kurze Beschreibung eines Verfahrens, das geeignet ist, Biertreber einer sinnvollen weiteren Verwertung zuzuführen. Interessant ist dieses Verfahren auch für Mittel- oder Kleinbrauereien, da die Anlage entsprechend dem Biertreberanfall - oder zumindest nach dem für die weitere Verarbeitung vorgesehenen Teil - ausgelegt werden kann.

Die Investitionskosten für die Gesamtanlage sind überschaubar. Das Fertigprodukt kann - ähnlich dem Bier - brauereiindividuell gestaltet werden.

Die Vermarktung des Fertigprodukts bleibt gesonderten Vereinbarungen mit Hilfsorganisationen, dem Fachhandel, gegebenenfalls auch brauereieigenen Absatzorganisationen, vorbehalten.

Außerdem wird mit der Erfindung eine Mühle zum Mahlen von teilchenförmigem Mahlgut, das in einer Flüssigkeit dispergiert ist, wie beispielsweise zum Mahlen der Biertreber, mit einem Mahlspalt, in welchem das Mahlgut zerkleinert wird, zur Verfügung gestellt, die erfindungsgemäß gekennzeichnet ist durch

(a) eine oder mehrere auf den Mahlspalt gerichtete Druckgasdüsen; und

(b) eine die Druckgasdüse oder -düsen in zeitlichen Abständen mit einer Druckgasquelle verbindende und von der Druckgasquelle wieder trennende DruckgaszuführungsSteuereinrichtung.

Vorzugsweise ist diese Mühle so ausgebildet, daß die Druckgasdüse oder -düsen auf der bezüglich des Mahlgutdurchflusses stromaufwärtigen Seite des Mahlspalts angeordnet ist bzw. sind.

Diese Mühle kann insbesondere so ausgebildet sein, daß die Druckgaszuführungs-Steuereinrichtung die Druckgasdüse oder -düsen jeweils während einer vorbestimmten Zeitdauer mit der Druckgasquelle verbunden hält, wobei vorzugsweise die vorbestimmte Zeitdauer (Druckgasimpulsdauer) im Bereich von 1 bis 20 sec, bevorzugt im Bereich von 1 bis 10 sec, einstellbar ist, und wobei außerdem bevorzugt die zeitlichen Abstände (Druckgasimpulsabstände) zwischen den Phasen, in denen die Druckgaszuführungs-Steuereinrichtung die Druckgasdüse oder -düsen mit der Druckgasquelle verbunden hält, im Bereich von 1 bis 60 sec, bevorzugt im Bereich von 1 bis 20 sec, einstellbar sind.

Anstelle oder in Kombination mit der vorstehenden zeitlichen Steuerung des Beginns der einzelnen Druckgasimpulse kann eine druckabhängige Steuerung vorgesehen sein, in dem die erfindungsgemäße Mühle so ausgebildet ist, daß ein Drucksensor vorgesehen ist, der den Druck in der Mühle, bezogen auf den Mahlgutdurchfluß, stromaufwärts von dem Mahlspalt in der Mühle detektiert, und daß die Druckgaszuführungs-Steuereinrichtung die Druckgasdüse oder -düsen immer dann mit der Druckgasquelle verbindet, wenn der von dem Drucksensor detektierte Druck einen vorbestimmten oberen Druckwert übersteigt.

Diese zuletzt genannte Ausführungsform kann in Weiterbildung der Erfindung so ausgebildet sein, daß auch die Länge der Druckgasimpulse druckabhängig gesteuert wird, indem die Druckgaszuführungs-Steuereinrichtung die Druckgasdüse oder -düsen von der Druckgasquelle wieder abtrennt, wenn der von dem Drucksensor detektierte Druck unter einen vorbestimmten unteren Druckwert abfällt. Stattdessen oder in Kombination hiermit kann aber auch die Druckgaszuführungs-Steuereinrichtung die Druckgasdüse oder -düsen jeweils nach einer vorbestimmten Zeitdauer (Druckgasimpulsdauer) wieder von der Druckgasquelle abtrennen.

Die Druckgasquelle kann insbesondere eine Druckluftquelle sein, da es in den meisten Fällen am günstigsten ist, als Druckgas Druckluft zu verwenden.

Die Mühle kann insbesondere eine Schermühle sein, und zwar beispielsweise eine Zahnkolloidmühle, eine Glockenmühle, eine Scheibenmühle oder ein Mahlgang.

Die vorstehenden sowie weitere Vorteile und Merkmale der Erfindung seien nachfolgend anhand einiger bevorzugter Ausführungsformen der Erfindung unter Bezugnahme auf die Figuren 1 bis 4 der Zeichnung in näheren Einzelheiten beschrieben; es zeigen:

Figur 1   eine Vorrichtung zur Durchführung und detaillierten Erläuterung einer besonders bevorzugten Ausführungsform des erfindungsgemäßen Verfahrens;

Figur 2   einen schematischen Axialschnitt durch eine Ausführungsform einer erfindungsgemäßen Mühle, wobei aus Darstellungsgründen die Zeichnung nicht maßstabsgerecht ausgeführt ist;

Figur 3   eine schematische Aufsicht von oben auf die Mühle der Figur 2; und

Figur 4   eine schematische Darstellung einer erfindungsgemäßen Mühle, die z.B. die Mühle nach den Figuren 2 und 3 sein kann, mit Kompressor, Vorratstank, Luftfilter und Steuergerät.

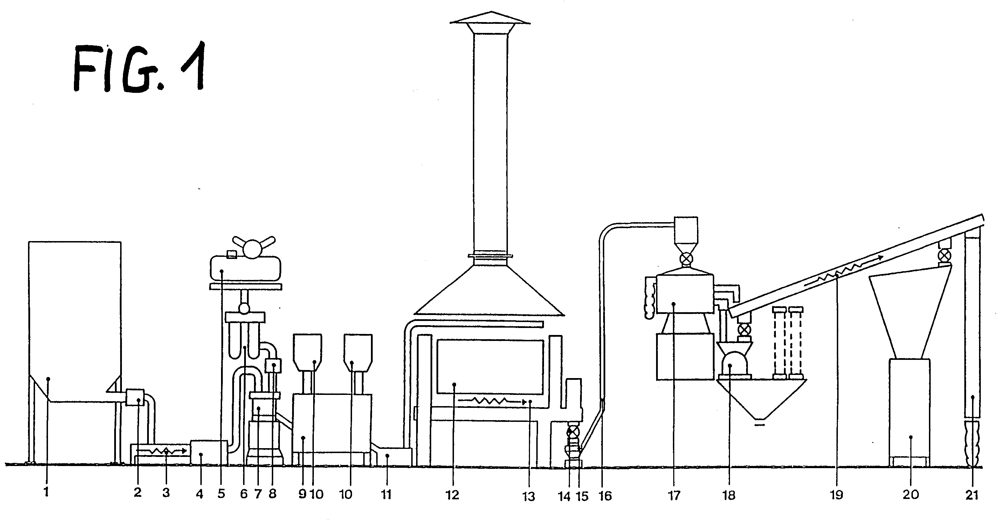

Es sei zunächst auf Figur 1 Bezug genommen, wonach ganz links ein Biertrebersilo mit Austrebervorrichtung 1 dargestellt ist. Dieser Austrebervorrichtung ist ein Magnet 2 nachgeschaltet. Magnet deshalb, da unter keinen Umständen Metallfremdkörper in nachfolgende Geräte gelangen dürfen. Die Biertreber werden in eine Vorpreßschnecke 3 befördert. Diese Vorpreßschnecke führt in eine Mohnopumpe 4, die den Biertreber als Mahlgut in eine Zahnkolloidmühle 7 fördert und drückt.

Die Biertreber gelangen dann in die Zahnkolloidmühle 7. In dieser Zahnkolloidmühle befinden sich ein normalverzahnter Mahlsatz oder ein kreuzverzahnter Mahlsatz für erhöhte Verkleinerungs- und Dispergierwirkung. In der Mühle wird zum Mahlvorgang ein Druck von 3,5 bis 6 bar aufgebaut, so daß das Mahlgut (Biertreber) kontinuierlich durch die Mühle befördert wird. Um diesen Mahlgang zu unterstützen, wird ein Kompressor 5 montiert. Dieser Kompressoranlage ist aus Gründen der Hygiene ein Hochleistungsfilter 6 zur Druckluftaufbereitung nachgeschaltet. Die Druckluft wird durch ringförmig angeordnete Düsen in die Mahlgutpassage der Mühle mittels einer mit Zeitschaltung 8 versehenen Feinregulierung eingeblasen (siehe Figur 1). Die in abstimmbaren Zeitabständen eingeblasenen, ebenfalls abstimmbaren Druckluftmengen bewirken durch die Druckentspannung eine Abkühlung im Mahlgang und blasen außerdem die Verzahnungen der Mahlsätze frei, so daß durch die bearbeiteten Treber keine Verschmierung und Verbackung eintritt, vielmehr der Mahlspalt zeit- und/oder druckabhängig freigeblasen wird.

Die derart sehr fein und gleichmäßig zerkleinerte Biertrebermasse wird aus der Mühle in einen Mischbehälter 9 mit starkem Rührgerät oder eine Knetmaschine zum Vermengen des Biertrebers mit Zutaten geführt. Anschließend stehen einer oder mehrere Vorratsbehälter zur Verfügung 10, die mit entsprechenden Dosier- und Fördereinrichtungen ausgerüstet sind. Je nach Konsistenz der Gemenge (aus Biertrebern und Zutaten) erfolgt der Auftrag auf die Trockenwalze 12 mit Dosierpumpen 11 und Linearauftragung, oder Knetmassedrück- und -fördereinrichtungen. Die Trocknungswalze ist mit sogenannten Satellitwalzen ausgerüstet. Diese bewirken, daß das aufgebrachte Gut gleichmäßig verteilt und in einem kurzen Trocknungsprozeß als gleichmäßiger Film von der Walze abgehen kann.

Das so getrocknete Gut fällt in die Kühl- oder Zerkleinerungsschnecke 13, fällt dann über einen Sicherheitsbecher mit Abscheider 14/15. Von dort wird das Trockengut in den sogenannten Sichter 16/17 befördert. Sofern gewünscht wird, daß das Gut fein vermahlen werden soll, wird diesem Sichter eine Mühle 18 nachgeschaltet. Das Trockengut ist nun verkaufsfertig 19 und wird je nach Art der Abgabe entweder abgepackt 21 oder wandert in ein Silo 20.

Beispiele 1 bis 4

In der in der Zeichnung dargestellten Vorrichtung wurde frischer nativer Biertreber auf eine Teilchengröße unter 2 mm unter Bildung einer homogenen Biertrebermasse vermahlen. Die genauen verwendeten Bedingungen sind in der folgenden Tabelle I dargestellt.

TABELLE I

| Versuche in der Zahnkolloidmühle (Mahlgut Biertreber) | | | | |
|---|---|---|---|---|
| Beispiel Nr.<br><br>Parameter | 1 | 2 | 3 | 4 |
| Mahlsatz<br>Pumpendruck bar<br><br>Temperatur | normal Kontakt<br>-4,5 | kreuzver-zahnt offen<br>-3,0 | kreuzver-zahnt 0,5 offen<br>-3,0 | kreuzverzahnt 0,5 offen<br>-4,5 |
| °C ein<br>°C aus<br>Durchsatz kg/h | 28<br>58<br>220 | 28<br>52,5<br>405 | 28<br>59<br>500 | 28<br>45<br>600 |

Erzeugung der Luftimpulse:

Perioden, Pausen zwischen den Stößen: 10 - 60 s, im Mittel ca. 30 s.

Intervalle, Luftstöße, Dauer: 1 - 10, Mittel 3 - 5 s;

Druckaufbau im Vorratstank: bis max. 10 bar; üblich sind 8 bar (mit etwas Absinken bei längeren Stößen, bis Kompressor wieder voll geladen hat)

Mit Hilfe der Luftimpulstechnik konnten alle Vermahlungen einwandfrei und störungsfrei durchgeführt werden.

Nach dem Zerkleinern des Trebers wurden die in der Tabelle II angeführten Zusatzstoffe im Mischer zugegeben. Das Gemisch wurde gut durchgeknetet und dann getrocknet. Die Bedingungen für die Walzenbeaufschlagung sind in der folgenden Tabelle III aufgeführt.

TABELLE II

| Beispiel Nr. | 1 | 2 | 3 | 4 |
|---|---|---|---|---|

im Versuch angesetzte Mengen jeweils in Gramm
(Rohware = Komponente)

| Komponenten: | | | | |
|---|---|---|---|---|
| T r e b e r   zerkleinert | 9.500 | 14.658 | 12.692 | 15.716 |
| Buttermilch | 4.000 | | | |
| Magermilch, 1,5 % Fettgeh. | | 4.000 | | |
| Speisequark, mager | 3.500 | | | |
| Zucker, fein, krist., weiß | 341 | 666 | | |
| Honig, Akazie/= fructosereich | 1.000 | | | |
| Vanillinzucker | | 20 | | |
| Weizenmehl Type 405 | 2.000 | 1.200 | 1.280 | 1.500 |
| Kakaoprodukt | | 800 | | |
| Tomatensauce | | | 50 | |
| klare Hühnersuppe | | | 507 | 253 |
| Tomatenmark, 28%ig | | | | 1.200 |
| Tomatenkräuterpaste | | | | 370 |
| Naßgutansatz | 20.341 | 21.324 | 14.529 | 19.039 |
| Trockenmasse (Biertreber) | φ 20.3 % TM | φ 20.3 % TM | φ 20.3 % TM | φ 18.6 % TM |

EP 0 609 548 A2

## TABELLE III

### Walzenbeaufschlagung

| Beispiel Nr. | 1 | 2 | 3 | 4 |
|---|---|---|---|---|
| Naßgutkonzentration (Biertrebermasse des zu trocknenden Gutes) vor Walze im Gemenge (Gemenge Biertreber + Zutaten) % | 28,7 | 27,6 | 28,9 | 26,8 |
| Viskosität in Naßgutmasse vor Walzenbeaufschlagung dPa.sec | 120 | 340 | 650-750 | 800 |
| Walzenanordnung auf Trockenzylinder 4 Auftragswalzen, Zufuhr in Sumpfe 3 + 4, Sumpf gut voll | | | | |
| Dampfdruck bar | 3,0 | 2,5 | 2,5 | 2,4 |
| Rotation Hauptzylinder Upm | 4,2/3,5 | 2,5 | 2,5 | 2,5 |

In der folgenden Tabelle IV sind die berechneten Trockenmassen angegeben.

TABELLE IV

Berechnung der Trockenmassen und (%) jeweils in Gramm (Komponenten-TM)

| Beispiel Nr. | 1 | 2 | 3 | 4 |
|---|---|---|---|---|
| **Komponenten:** | | | | |
| T r e b e r (0.203) | 1.929 (33) | 2.976 (51) | 2.576 (61) | 3.190 (63) |
| Buttermilch | 352 (6) | | | |
| Magermilch, mit 1,5 % Fett | | 416 (7) | | |
| Speisequark, mager (fettfrei) | 655 (11) | | | |
| Zucker, fein, krist., weiß | 341 (6) | 666 (11) | | |
| Honig, Akazie (fructosereich) | 800 (14) | | | |
| Vanillinzucker | | 20 (0.34) | | |
| Weizenmehl, Type 405 | 1.722 (30) | 1.033 (18) | 1.103 (26) | 1.292 (25) |
| Kakaoprodukt | | 768 (13) | | |
| Tomatensauce | | | 48 (1) | 45 (1) |
| Tomatenmark, 28 %ig, | | | | |
| Tomatenkräuterpaste | | | | 336 (7) |
| klare Hühnersuppe | | 472 (11) | | 235 (5) |
| Trockenmassen (= 100%) ges. | 5.799 | 5.879 | 4.199 | 5.098 |
| Prozente | (100) | (100) | (100) | (100) |

(alle obigen () Prozentangaben sind stark gerundet)

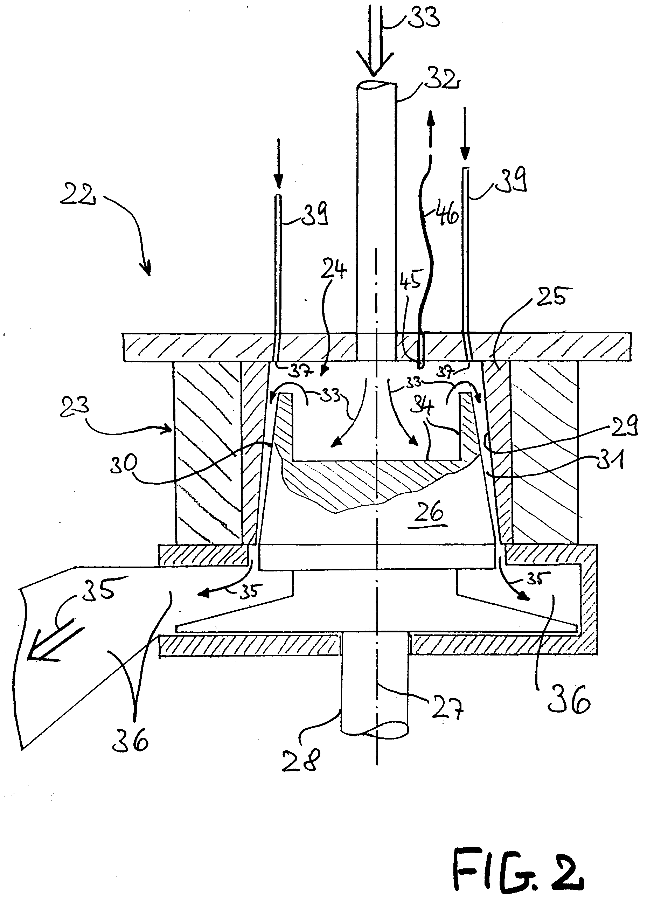

Anhand der Figuren 2, 3 und 4 sei nun eine Ausführungsform der Mühle nach der Erfindung näher beschrieben:

Die insgesamt mit 22 bezeichnete Mühle, welche beispielsweise die Zahnkolloidmühle 7 in der Vorrichtung der Figur 1 sein kann, umfaßt ein Gehäuse 23, das eine Mahlkammer 24 umschließt, in der sich ein Stator 25 und ein Rotor 26 befindet, die zueinander konzentrisch um die Rotationsachse 27 des über die Welle 28 angetriebenen Rotors 26 sind.

Zwischen dem Stator 25, der als Mahlfläche einen Innenkonus 29 aufweist, und dem Rotor 26, der als Mahlfläche einen Außenkonus 30 aufweist, ist ein Mahlspalt 31 vorhanden, durch den das über ein Zuführungsrohr 32 zugeführte Mahlgut 33, nachdem es in eine Vertiefung 34 des Rotors 26 eingetreten ist (die einen Eintrittsteil der Mahlkammer 24 bildet), hindurchgeht und dabei zerkleinert wird, wonach das zerkleinerte Mahlgut 35 über eine Sammel- und Austrittskammer 36 aus der Mühle 22 abgeführt wird.

Insoweit ist diese Mühle als sogenannte Zahnkolloidmühle bekannt, in welcher der Innenkonus 29 und der Außenkonus 30 einfach verzahnt oder kreuzverzahnt sind, wobei sich der Mahlspalt 31 in Durchflußrichtung des Mahlguts 33 verengt und dieser Mahlspalt 31 im allgemeinen in seiner Weite einstellbar ist, indem der Stator 25 oder der Rotor 26 in der Richtung der Rotationsachse 27 verstellbar sind.

Gemäß der Erfindung ist diese Mühle so ausgebildet, daß

(a) eine oder mehrere Druckgasdüsen 37 so vorgesehen sind, daß dieselben auf den Mahlspalt 31 gerichtet sind, und zwar vorzugsweise so, daß der jeweilige Druckgasstrahl, wenn er aus einer Druckgasdüse 37 austritt, im wesentlichen parallel zu den Begrenzungswänden des Mahlspalts 31, also zum Innenkonus 29 und zum Außenkonus 30, verläuft; und

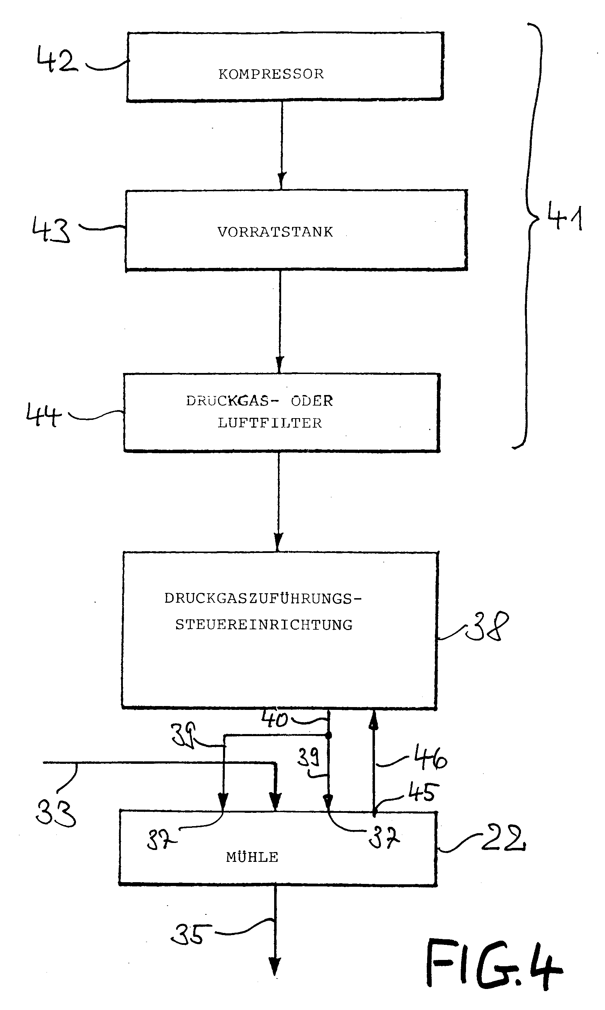

(b) eine Druckgaszuführungs-Steuereinrichtung 38 (siehe Figur 4) vorgesehen ist, an welche die Druckgasdüsen 37 über Druckgasleitungen 39, die in eine gemeinsame Druckgasleitung 40 übergehen können (siehe Figur 4) angeschlossen sind, wobei die Druckgaszuführungs-Steuereinrichtung 38 die Druckgasdüsen 37 in zeitlichen Abständen mit einer Druckgasquelle 41 verbindet und sie wieder von der Druckgasquelle 41 trennt.

Die Druckgasquelle 41, die bevorzugt eine Druckluftquelle ist, kann, wie die Figur 4 zeigt, im wesentlichen aus einem Kompressor 42, einem Vorratstank 43 und einem Druckgas- oder Luftfilter 44 bestehen oder dieselben umfassen. Beispielsweise kann der Kompressor 42 der in Figur 1 gezeigte Kompressor 5 sein, und das Druckgas- oder Luftfilter 44 kann das in Figur 1 dargestellte Hochleistungsfilter 6 sein.

Die Druckgaszuführungs-Steuereinrichtung 38 kann in einem besonders einfachen Fall die in Figur 1 gezeigte Zeitschaltuhr 8 und ein von derselben in den Öffnungs- und Schließzustand gesteuertes Absperrventil- oder Absperr-Drosselventil sein. Natürlich kann in der Druckgasquelle 41 auch ein Druckreduzierventil vorgesehen sein, wobei der Druck bevorzugt so einstellbar ist, daß das Druckgas aus den Druckgasdüsen 37 mit einem Druck zwischen 3 und 17 bar, mehr bevorzugt zwischen 3 und 8 bar, in die Mahlkammer 24 eingeblasen wird.

Die Druckgaszuführungs-Steuereinrichtung 38 kann aber auch in den verschiedensten anderen Ausführungsformen, wie sie zum Steuern der Zuführung von Druckgas in pneumatischen Steuereinrichtungen an sich bekannt sind, vorgesehen sein.

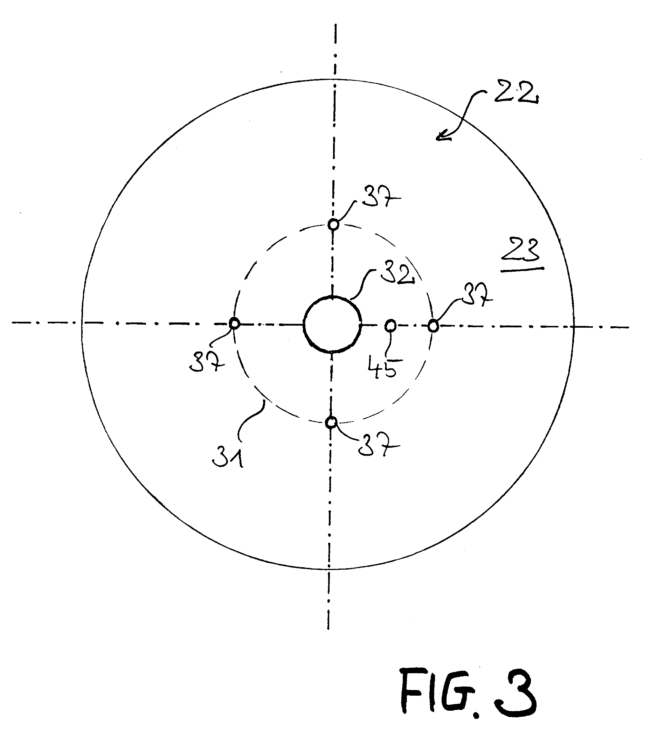

Wie die Figur 2 zeigt, sind die Druckgasdüsen 37 auf der bezüglich des Mahlgutdurchflusses stromaufwärtigen Seite des Mahlspalts 31 angeordnet. Aus Figur 3 ist ersichtlich, daß die Druckgasdüsen 37 vorzugsweise in gleichen Abständen voneinander über den Umfang des Mahlspalts 31 verteilt angeordnet sind.

In der einen bevorzugten Ausführungsform ist die Druckgaszuführungs-Steuereinrichtung so ausgebildet, daß sie die Druckgasdüsen 37 jeweils während einer vorbestimmten Zeitdauer mit der Druckgasquelle 41 verbunden hält, wobei diese vorbestimmte Zeitdauer, d.h. die Druckgasimpulsdauer der aus den Druckgasdüsen 37 austretenden Druckgasimpulse, im Bereich von 1 bis 20 sec, bevorzugt im Bereich von 1 bis 10 sec, einstellbar ist. Auch die zeitlichen Abstände zwischen den Druckgasimpulsen sind einstellbar, und zwar vorzugsweise im Bereich von 1 bis 60 sec, besonders bevorzugt im Bereich von 1 bis 20 sec.

In einer anderen Ausführungsform ist ein Drucksensor 45 vorgesehen, der den Druck in der Mühle 22, bezogen auf den Mahlgutdurchfluß, stromaufwärts von dem Mahlspalt 31 detektiert und dessen Detektionssignal über eine Leitung 46 der Druckgaszuführungs-Steuereinrichtung 38 zugeführt wird. Dieser Drucksensor 45 kann natürlich auch in der Druckgaszuführungs-Steuereinrichtung 38 selbst angeordnet und mit der Mahlkammer 24 über eine Schlauch- oder Rohrleitung verbunden sein. In der Ausführungsform mit einem Drucksensor 45 arbeitet die Druckgaszuführungs-Steuereinrichtung 38 druckgesteuert, indem sie die Druckgasdüsen 37 immer dann mit der Druckgasquelle 41 verbindet, wenn der von dem Drucksensor 45 detektierte Druck einen vorbestimmten oberen Druckwert übersteigt.

Die Länge des jeweiligen Druckgasimpulses kann in dieser Ausführungsform entweder in der Weise bestimmt werden, daß die Druckgaszuführungs-Steuereinrichtung 38 die Druckgasdüsen 37 von der Druckgasquelle 41 wieder abtrennt, wenn der von dem Drucksensor 45 detektierte Druck unter einem vorbestimmten unteren Druckwert abfällt, oder indem die Druckgaszuführungs-Steuereinrichtung die Druckgasdüsen 37 während einer vorbestimmten Zeitdauer mit der Druckgasquelle 41 verbunden hält.

Obwohl das vorstehende Ausführungsbeispiel anhand einer Zahnkolloidmühle erläutert wurde, ist die erfindungsgemäße Mühle keineswegs darauf beschränkt, sondern sie kann auch jede andere Mühle sein, die einen durch das Mahlgut verstopfbaren, insbesondere verbackenden und/oder verschmierenden, Mahlspalt hat, beispielsweise eine Schermühle anderer Ausführungsform, wie z.B. eine Glockenmühle, eine Scheibenmühle oder ein Mahlgang.

**Patentansprüche**

1.  Verfahren zur Herstellung eines Nahrungsmittels aus Biertreber bei dem die folgenden Stufen durchgeführt werden:

(1) Zerkleinern des Biertrebers durch Einpressen des feuchten Biertrebers in ein Mahlgerät unter Druck, Verhindern des Verbackens und/oder des Verschmieren des Trebers im Gerät durch Luftimpulse und Vermahlen des Biertrebers bis zu einer Teilchengröße von maximal 0,25 mm unter Bildung einer homogenen Biertrebermasse,

(2) Zumischen von einem oder mehreren Zusatzstoffen zu der Biertrebermasse, und

(3) Trocknen des Gemisches.

2. Verfahren nach Anspruch 1, dadurch **gekennzeichnet,** daß die bei der Stufe (3) anfallenden Biertreberflocken fein zermahlen werden.

3. Verfahren nach Anspruch 1 oder 2, dadurch **gekennzeichnet,** daß bei der Stufe (1) ein Druck von 2,0 bis 12 bar erzeugt wird.

4. Verfahren nach einem der Ansprüche 2 oder 3, dadurch **gekennzeichnet,** daß die Luftimpulse erzeugt werden, indem Luft mit einem Überdruck von 3 bis 17, vorzugsweise von 3 bis 8 bar, Periodisch in das Mahlgerät eingeleitet wird.

5. Verfahren nach einem der Ansprüche 1 bis 4, dadurch **gekennzeichnet,** daß die Trocknung bei einer Temperatur im Bereich von 60 bis 110°C, vorzugsweise bei der Siedetemperatur des Wassers (100°C), erfolgt.

6. Verfahren nach mindestens einem der Ansprüche 1 bis 5, dadurch **gekennzeichnet,** daß die Trocknung während einer Zeit von 5 Minuten bis 60 Minuten erfolgt.

7. Verfahren nach mindestens einem der vorhergehenden Ansprüche, dadurch **gekennzeichnet,** daß der Biertrebermasse bei der Stufe (2) Getreidemehl, Zucker, Honig, Kakaopulver, Milchpulver, Fleischaroma, Tomatenmark, beliebige trockene oder pastöse Lebensmittel, Mineralstoffe, Spurenelemente, Medikamente oder ein Gemisch von zwei oder mehr der vorgenannten Zusatzstoffe beigemischt werden bzw. wird.

8. Verfahren nach einem der vorhergehenden Ansprüche, dadurch **gekennzeichnet,** daß der Biertrebermasse bei der Stufe (2) 5 bis 40 Gew.-% Zusatzstoff, vorzugsweise 5 bis 50 Gew.-% Zusatzstoff, bezogen auf die bei der Stufe (3) erhaltene Trockenmasse, beigemischt wird.

9. Mühle (22) zum Mahlen von teilchenförmigem Mahlgut (33), das in einer Flüssigkeit dispergiert ist, mit einem Mahlspalt (31), in welchem das Mahlgut (33) zerkleinert wird, **gekennzeichnet** durch
    (a) eine oder mehrere auf den Mahlspalt (31) gerichtete Druckgasdüse(n) (37); und
    (b) eine die Druckgasdüse oder -düsen (37) in zeitlichen Abständen mit einer Druckgasquelle (41) verbindende und von der Druckgasquelle (41) wieder trennende Druckgaszuführungs-Steuereinrichtung (38).

10. Mühle nach Anspruch 9, dadurch **gekennzeichnet,** daß die Druckgasdüse oder -düsen (37) auf der bezüglich des Mahlgutdurchflusses stromaufwärtigen Seite des Mahlspalts (31) angeordnet ist bzw. sind.

11. Mühle nach Anspruch 9 oder 10, dadurch **gekennzeichnet,** daß die DruckgaszuführungsSteuereinrichtung (38) die Druckgasdüse oder -düsen jeweils während einer vorbestimmten Zeitdauer mit der Druckgasquelle (41) verbunden hält.

12. Mühle nach Anspruch 11, dadurch **gekennzeichnet,** daß die vorbestimmte Zeitdauer (Druckgasimpulsdauer) im Bereich von 1 bis 20 sec, bevorzugt im Bereich von 1 bis 10 sec, einstellbar ist.

13. Mühle nach einem der Ansprüche 9 bis 12, dadurch **gekennzeichnet,** daß die DruckgaszuführungsSteuereinrichtung (38) die Druckgasdüse oder -düsen (37) in vorbestimmten zeitlichen Abständen mit der Druckgasquelle (41) verbindet.

14. Mühle nach einem der Ansprüche 9 bis 13, dadurch **gekennzeichnet,** daß die zeitlichen Abstände (Druckgasimpulsabstände) zwischen den Phasen, in denen die Druckgaszuführungs-Steuereinrichtung (38) die Druckgasdüse oder -düsen (37) mit der Druckgasquelle (41) verbunden hält, im Bereich von 1 bis 60 sec, bevorzugt im Bereich von 1 bis 20 sec, einstellbar sind.

15. Mühle nach einem der Ansprüche 9 bis 14, dadurch **gekennzeichnet,** daß ein Drucksensor (45) vorgesehen ist, der den Druck in der Mühle (22), bezogen auf den Mahlgutdurchfluß, stromaufwärts von dem Mahlspalt (31) in der Mühle (32) detektiert, und daß die Druckgaszuführungs-Steuereinrichtung (38) die Druckgasdüse oder -düsen (37) immer dann mit der Druckgasquelle (41) verbindet, wenn der von dem Drucksensor (45) detektierte Druck einen vorbestimmten oberen Druckwert übersteigt.

16. Mühle nach Anspruch 15, dadurch **gekennzeichnet,** daß die Druckgaszuführungs-Steuereinrichtung (38) die Druckgasdüse oder -düsen (37) von der Druckgasquelle (41) wieder abtrennt, wenn der von dem Drucksensor (45) detektierte Druck unter einen vorbestimmten unteren Druckwert abfällt.

17. Mühle nach einem der Ansprüche 9 bis 16, dadurch **gekennzeichnet,** daß die Druckgasquelle (41) eine Druckluftquelle ist.

18. Mühle nach einem der Ansprüche 9 bis 17, dadurch **gekennzeichnet,** daß der Druck der der Druckgasdüse oder den Druckgasdüsen (37) zugeführten Druckgases zwischen 3 und 17 bar, vorzugsweise zwischen 3 und 8 bar, einstellbar ist.

19. Mühle nach einem der Ansprüche 9 bis 18, dadurch **gekennzeichnet,** daß die Mühle (22) eine Schermühle ist.

20. Mühle nach Anspruch 19, dadurch **gekennzeichnet,** daß die Schermühle eine Zahnkolloidmühle, eine Glockenmühle, eine Scheibenmühle oder ein Mahlgang ist.

FIG. 1

FIG. 2

EP 0 609 548 A2

FIG. 3

16

42 — | KOMPRESSOR |

43 — | VORRATSTANK |

44 — | DRUCKGAS- ODER LUFTFILTER |

41

| DRUCKGASZUFÜHRUNGS-STEUEREINRICHTUNG | 38

40

39

39

46

45

33

32    37    22

| MÜHLE |

35

FIG.4

17